(19) Europäisches Patentamt
European Patent Office
Office européen des brevets

(11) Veröffentlichungsnummer: **0 102 487**
**B1**

(12) # EUROPÄISCHE PATENTSCHRIFT

(45) Veröffentlichungstag der Patentschrift: **14.10.87**

(51) Int. Cl.⁴: **C 08 G 63/54**, H 01 B 3/42

(21) Anmeldenummer: **83106909.1**

(22) Anmeldetag: **14.07.83**

(54) **Ungesättigte, homo- und/oder copolymerisierbare Poylester, Verfahren zu ihrer Herstellung und ihre Verwendung.**

(30) Priorität: **09.08.82 DE 3229618**

(43) Veröffentlichungstag der Anmeldung: **14.03.84 Patentblatt 84/11**

(45) Bekanntmachung des Hinweises auf die Patenterteilung: **14.10.87 Patentblatt 87/42**

(84) Benannte Vertragsstaaten: **AT BE CH DE FR GB IT LI NL SE**

(56) Entgegenhaltungen:
**DE-A-2 344 042**
**FR-A-2 458 563**
**US-A-3 454 673**

**CHEMICAL ABSTRACTS, Band 79, Nr. 2, 16 Juli 1973, Seite 80, Nr. 6658y, Columbus, Ohio, US**

(73) Patentinhaber: **BASF Lacke + Farben Aktiengesellschaft, Max- Winkelmann- Strasse 80, D-4400 Münster (DE)**

(72) Erfinder: **Hegemann, Günther, Dr. Dipl.- Chem., Andreasstrasse 23, D-2000 Hamburg 60 (DE)**
Erfinder: **Miedeck, Karin, Stubbenberg 24, D-2100 Hamburg 90 (DE)**

(74) Vertreter: **Habbel, Hans- Georg, Dipl.- Ing., Postfach 3429 Am Kanonengraben 11, D-4400 Münster (DE)**

**EP 0 102 487 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft ungesättigte, homo- und/oder copolymerisierbare lineare Polyester, hergestellt aus linearen, niedermolekularen Diolen, höhermolekularen Diolen mit endständigen Hydroxylgruppen und mindestens einer ungesättigten Dicarbonsäure bzw. deren zur Esterbildung befähigten Derivaten, ein Verfahren zu ihrer Herstellung und ihre Verwendung.

Die Klasse der homo- und/oder copolymerisierbaren ungesättigten Polyester, ihre Herstellung und ihre Verarbeitung sind bekannt. So können ungesättigte Polyesterharze durch Copolyveresterung von ein- und/oder mehrwertigen Alkoholen mit ein- und/oder mehrwertigen Carbonsäuren und/oder gegebenenfalls Hydroxycarbonsäuren mit alkoholischen Hydroxylgruppen oder auch unter Verwendung bzw. Mitverwendung deren zur Esterbildung befähigten Derivate hergestellt werden. Dabei wird wenigstens eine Verbindung, die olefinisch ungesättigt und homo- oder copolymerisierbar ist, in das Polyesterharz einkondensiert, wobei die Durchschnittsfunktionalität und das Verhältnis von Hydroxyl- zu Carboxylgruppen nach den bekannten Regeln aus dem Stand der Technik so gewählt werden müssen, daß die Bildung von Polyestern gewährleistet ist. Diese Harze lassen sich dann insbesondere nach Zusatz von radikalliefernden Verbindungen und gegebenenfalls nach Zusatz von olefinisch ungesättigten copolymerisierbaren monomeren Verbindungen auch in dicken Schichten zu Duroplasten härten.

Diese bekannten Polyester werden insbesondere in Form ihrer Lösungen in copolymerisierbaren Vinyl- und/oder Allylmonomeren als Gießharze zum Imprägnieren von elektrischen Maschinen oder Teilen hiervon verwendet. Mit ihnen werden z. B. Statoren von Elektromotoren oder Transformatoren nach verschiedenen Tränkverfahren, wie Tauchen oder Träufeln, imprägniert. Weiterhin können mit ihnen elektrische oder elektronische Bauteile oder vollständige Schaltungen oberflächlich beschichtet werden.

Nach dem Tauchen der Maschinen oder der Bauteile werden diese durch eine Abdunst- und Abtropfzone geführt, dann wird das anhaftende Polyesterharz in einem Ofen gehärtet. Bei diesem Verfahren treten also zunächst Abtropfverluste in der Abtropfzone auf. Wenn auch das hier anfallende Harz wieder in den Tauchbehälter zurückgeführt werden kann, ergibt sich doch der Nachteil, daß das Abtropfen zu einer unvollständigen Imprägnierung führt. Weiterhin treten vor der Aushärtung zusätzliche Abtropfverluste im Ofen auf, wenn die Viskosität der Gießharze durch die Temperaturerhöhung sinkt. Dies ist besonders nachteilig, da das im Ofen abtropfende Material aushärtet und nicht nur nicht mehr verwendet werden kann, sondern zu einer erheblichen Verunreinigung des Ofens führt.

Ein weiteres Problem, das sich aus dem Abtropfen bzw. dem Ablaufen der verwendeten Gießharze ergibt, ist das Auftreten von ungleichmäßigen, von oben nach unten zunehmenden Schichtdicken und die Ausbildung von Wulsten am unteren Rand von beschichteten Bauteilen.

Zur Vermeidung dieser Nachteile ist es bekannt, durch Zusatz von Fließanomalien erzeugenden Substanzen zu den Gießharzen Strukturviskosität bzw. Thixotropie in diesen zu erzeugen. Hierzu werden üblicherweise Substanzen, wie pyrogene Kieselsäure, Asbestfasern, Quarzmehl, Mikrodolomit oder auch flüssige Komponenten, wie Rizinusölderivate, Acrylharze oder Silikonharze verwendet. Die Verwendung dieser Zusatzstoffe ist mit einigen Nachteilen verbunden. So ergeben die anorganischen Komponenten keine klaren Lösungen, und ihre Einarbeitung in die Polyesterharze ist nicht immer einfach. Die obengenannten flüssigen Komponenten liegen nachteilig als Weichmacher in den Harzen vor. Weiterhin kann es bei Verwendung der genannten Zusatzstoffe zu einer Hautbildung der Gießharze kommen.

Aus der DE-A-23 44 042 ist ein Verfahren zur Herstellung ungesättigter Polyester bekannt, bei dem in einer ersten Stufe Dialkylterephthalat mit einem vielwertigen Alkohol umgeestert wird. Das erhaltene Reaktionsprodukt wird in einer zweiten Stufe zusammen mit ungesättigten Dicarbonsäuren, mehrwertigen Alkoholen und gegebenenfalls gesättigten Dicarbonsäuren zu einem ungesättigten Polyester umgesetzt. Anschließend wird dieser in Vinylmonomeren aufgelöst. Das in der ersten Stufe erhaltene Umesterungsprodukt aus Dialkylterephthalat und einem mehrwertigen Alkohol hat ein relativ geringes Molekulargewicht. Es handelt sich hierbei um ein Polyesterdiol mit nur einer Terephthalsäureeinheit, dessen Molekulargewicht unter 700 liegt.

Aus der US-A-3 454 673 ist die Herstellung ungesättigter Polyester unter Verwendung von Imiden bekannt.

Gemäß der FR-A-24 58 563 werden ungesättigte Polyester hergestellt, wobei oligomere Terephthalate durch Umsetzung mit Glykolen umgeestert werden. Durch diese Umesterung werden die oligomeren Terephthalate gespalten. Die gemäß dieser Druckschrift erhaltenen ungesättigten Polyester haben Molekulargewichte bis etwa 500.

Die bekannten ungesättigten Polyesterharze haben kein ausreichendes strukturviskoses bzw. thixotropes Verhalten.

Es ist Aufgabe der Erfindung, diese Nachteile des Standes der Technik zu vermeiden und Polyester zu schaffen, die aufgrund ihres molekularen Aufbaus Fließanomalien aufweisen und strukturviskoses bzw. thixotropes Verhalten ohne den Zusatz von Hilfsmitteln zeigen.

Überraschenderweise wurde nun gefunden, daß diese Aufgabe gelöst werden kann durch den Einbau von langkettigen Alkoholen in die Polyester, wobei diese langkettigen Alkohole einen Teil der üblichen niedermolekularen Alkohole ersetzen.

Gegenstand der Erfindung sind also ungesättigte, homo- und/oder copolymerisierbare lineare Polyester der eingangs genannten Art, die dadurch gekennzeichnet sind, daß die Polyester als Komponente A ein Diol mit endständigen Hydroxylgruppen und einem mittleren Molekullargewicht von 700 - 1200, als Komponente B eine

oder mehrere α,β-ungesättigte Dicarbonsäuren aus der Gruppe Maleinsäure, Fumarsäure, Itaconsäure, Citraconsäure, Mesaconsäure und Aconitsäure bzw. deren Derivate und als Komponente C ein lineares Diol mit 2 - 6 Kohlenstoffatomen einkondensiert enthalten, wobei das Äquivalentverhältnis A : B von 0,8 : 1 bis 1,2 : 1 und das Äquivalentverhältnis C : (A + B) von 0,5 : 1 bis 1 : 1 betragen.

Die erfindungsgemäßen Polyester zeigen strukturviskoses bzw. thixotropes Verhalten ohne den Zusatz der bisher üblicherweise zur Erzielung der genannten Fließanomalien verwendeten Substanzen.

Vorteilhaft ist die Komponente A ein Polyesterdiol. Hierdurch wird eine gute Verträglichkeit erzielt, wenn die erfindungsgemäßen Polyester in Mischung mit anderen ungesättigten Polyestern verwendet werden.

Als Komponente A besonders geeignete Polyesterdiole sind solche, die durch Glykolyse von Polyethylenterephthalat gewonnen worden sind. Unter Glykolyse wird der Abbau von hochmolekularem Polyethylenterephthalat zu niedermolekularen Polyesterdiolen durch Erhitzen in Gegenwart von Glykolen verstanden. Die so erhaltenen Polyesterdiole verleihen einerseits den erfindungsgemäßen ungesättigten Polyestern die gewünschten Fließanomalien und sind andererseits durch Einstellung der Reaktionsbedingungen in dem gewünschten Molekulargewichtsbereich gut zugänglich. Hier kann auch die Verwertung von Polyethylenterephthalatabfällen in Erwägung kommen, wodurch eine besondere Wirtschaftlichkeit gegeben ist.

Die als Komponente A bevorzugten Polyesterdiole sind durch Umsetzung von Polyethylenterephthalat mit Propylenglykol im Gewichtsverhältnis Polyethylenterephthalat : Propylenglykol von 8 : 1 bis 12 : 1 erhalten worden. Propylenglykol wird wegen seines in bezug auf den Schmelzpunkt des Polyethylenterephthalats günstigen Siedepunkt bevorzugt.

Aus dem großen Bereich des bekannten Wissens über die Herstellung von ungesättigten Polyestern seien im folgenden eine Reihe von Reaktanten genannt, die im Rahmen der Erfindung eingesetzt werden können. Als Komponente C können z. B. verwendet werden: Glykol, Propandiole, Butandiole, Hexandiole.

Homo- oder copolymerisierbare olefinisch ungesattigte Verbindung, die zur Herstellung von ungesättigten Polyestern verwendet und auch im Rahmen der Erfindung eingesetzt werden, sind Maleinsäure, Fumarsäure, Itaconsäure, Citraconsäure, Mesaconsäure und Aconitsäure.

Anstelle der freien Säuren können in bekannter Weise auch deren funktionelle Derivate wie Ester, Anhydride Chloride verwendet werden.

Zur Erhöhung der thermischen Dauerbelastbarkeit der erfindungsgemäßen ungesättigten Polyester im gehärteten Zustand sind die Polyester vorteilhaft mit stickstoffhaltigen Verbindungen der allgemeinen Formeln

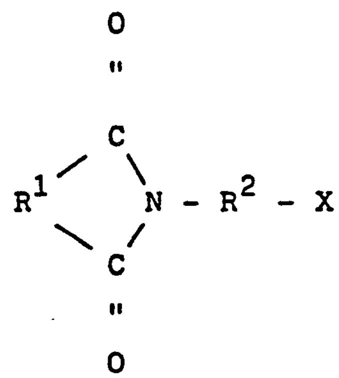

oder

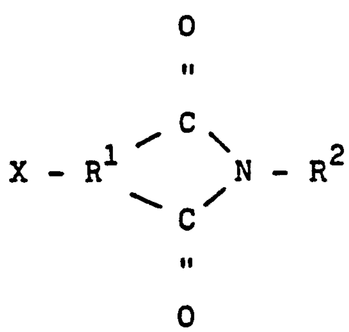

modifiziert, in denen $R^1$ einen aliphatischen Rest, an dem die beiden zur Anhydridbildung befähigten Carboxylreste in 1,2- oder 1,3-Stellung stehen, $R^2$ einen Alkyl- oder Arylrest und X einen OH- oder $CO_2H$-Rest bedeuten, wobei gegebenenfalls die Verknüpfung der Hydroxylgruppen der stickstoffhaltigen Verbindungen an den Hydroxylgruppen des ungesättigten Polyesters mit Di- oder Triisocyanaten erfolgt sein kann.

Als ein einfacher Vertreter dieser stickstoffhaltigen Verbindungen, die durch den stets vorhandenen Imidring I besonders gekennzeichnet ist und als Endgruppe verwendet werden kann, sei hier die folgende, aus Phthalsäureanhydrid und Monoäthanolamin leicht herstellbare Verbindung (a) genannt:

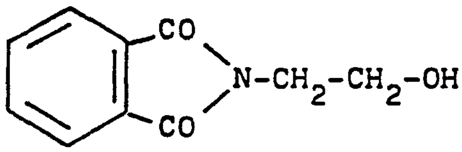

Abänderungen dieses einfachen Modells sind leicht dadurch zu erreichen, daß man an Stelle des einfachen Phthalsäureanhydrids substituierte, teilweise hydrierte oder komplizierter gebaute Abkömmlinge der o-Phthalsäure wählt, beispielsweise halogenierte Phthalsäureanhydride (Tetrachlor- oder Tetrabromphthalsäureanhydrid), alkylierte oder hydrierte Systeme (Methyl-, Tetrahydro-, Hexahydro-, Methylhexahydro-, Endomethylentetrahydrophthalsäureanhydrid). Zu einer ganz anderen Gestaltung des Ringes I kommt man, wenn man Verbindungen wie Malein- oder Citraconsäure, Bernsteinsäure bzw. Derivate und alkylierte Abkömmlinge oder die Anlagerungsprodukte von Malein- bzw. Citraconsäure an Dicyclopentadien, ungesättigte Ketone oder Diolefine wählt. Es dürfen aber auch Verbindungen wie z. B. Trimellithsäureanhydrid verwendet werden. Diese Säure ergibt, mit einem passenden Amin umgesetzt z. B. mit Monobutylamin, einen Baustein, bei welchem der Rest X durch den am aromatischen Ring sitzenden Carboxylrest vertreten ist.

Ebenso gehören auch Verbindungen wie 1,8-Naphthalsäure oder Naphthalin-1,2-dicarbonsäure in Form ihrer Anhydride hierher (c, d), und weitere Formelbilder e bis g zeigen weitere Variationsmöglichkeiten. Andererseits läßt sich das einfache Äthanolamin durch die verschiedensten Aminoverbindungen ersetzen, beispielsweise durch die isomeren Propanol- oder Butanolamine oder andere höhere Homologe, durch im Kern aminierte Phenylätheralkohole oder Aminocarbonsäuren oder durch im Kern aminierte Äthoxylierungsprodukte von Phenolen.

Hierher gehören auch die nachstehend formulierten Umsetzungsprodukte des Trimellithsäureanhydrids, die sämtlich der oben skizzierten allgemeinen Formulierung eines Carbonsäureimidsystems, verbunden mit einer noch aktiven monofunktionellen Gruppierung entsprechen.

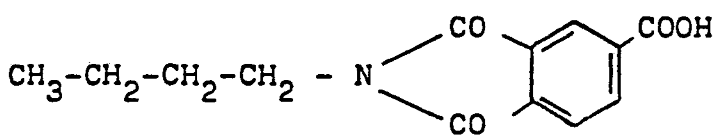

(b)

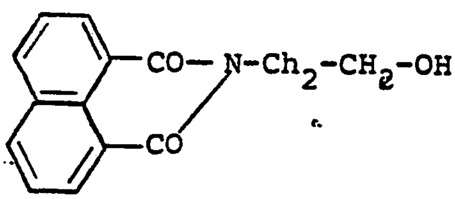

(c)

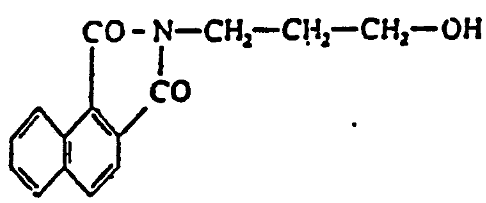

(d)

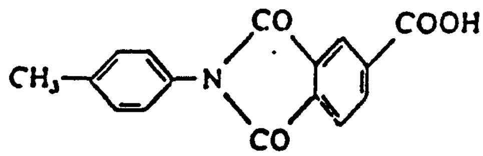

(c)

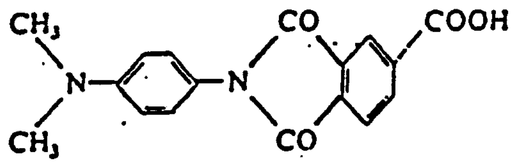

(f)

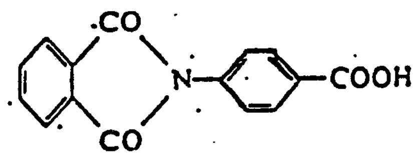

(g)

Diese oder ähnliche Verbindungen, deren Herstellung hier nicht unter Schutz gestellt werden soll, lassen sich in an sich bekannter Weise durch Erhitzen oder auch nur durch mäßiges Erwärmen der Komponenten in Lösung oder Schmelze gewinnen und in vielen Fällen als gut kristallisierte Verbindungen isolieren. Man kann aber auch ohne Isolation der Produkte so verfahren, daß man entweder das in Schmelze oder Lösung vorgefertigte Produkt wie eine gewöhnliche monofunktionelle Verbindung in den bekannten Aufbau eines ungesättigten Polyesters durch Zumischen der weiteren Rohstoffe und deren gemeinsames Erhitzen mit einbezieht oder indem man mit einem bereits weitgehend vorgefertigten, noch freie OH- oder COOH-Gruppen enthaltenden ungesättigten Polyester den Imidbaustein schmelzkondensiert und ihn sofort anschließend mit den vorbereiteten ungesättigten Polyester zum Endprodukt kondensiert. In jedem Falle sind natürlich die Beständigkeitsgrenzen und sonstige Eigenschaften des Imidbausteins zu berücksichtigen.

Sehr glatt erfolgt eine solche Anfügung von Endgruppen über Diisocyanate, wobei entweder der vorgefertigte Hydroxylpolyester mit überschüssigem Isocyanat umgesetzt wird

HO - [UP] - OH

$2R(NCO)_2$

$OCN\text{-}R\text{-}NH\text{-}CO\text{-}O[UP]\text{-}O\text{-}CO\text{-}NH\text{-}R\text{-}NCO_2$

UP = ungesättigter Polyester

worauf an den noch aktiven NCO-Gruppen Umsetzung mit einem Hydroxyl-Imidbaustein erfolgen kann, oder man setzt zunächst ein Hydroxyl-Imidsystem mit überschüssigem Diisocyanat um und bringt dieses Produkt mit einem Hydroxylpolyester zur Reaktion:

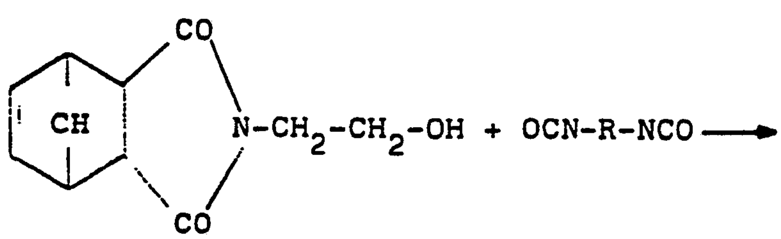

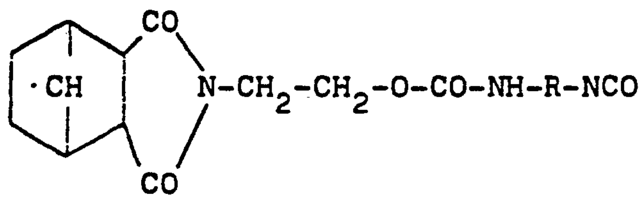

Diese recht unterschiedlich gebauten Imidbausteine sind als monofunktionelle Endgruppe bestimmend für die Kettenlänge, das Molekulargewicht, die Molekülgestalt und damit für die technisch wichtige Viskosität.

Neben diesen monofunktionellen Imidbausteinen können die Imidreste auch über difunktionelle Bausteine in den Polyester eingebaut werden. Vorteilhaft sind dazu in die Polyester Reste einer Dicarbonsäure, eines Dialkohols und/oder einer Hydroxycarbonsäure mit jeweils wenigstens einer fünfgliedrigen cyclischen Imidgruppe einkondensiert. Die bei der Polyesterherstellung zu verwendenden, eine oder mehrere 5-gliedrige cyclische Imidgruppen enthaltenden Verbindungen müssen zwei funktionelle Gruppen enthalten, die in die Bildungsreaktion des ungesättigten Polyesterharzes eingreifen. In Betracht kommen hier zweiwertige Alkohole, zweiwertige Carbonsäuren und/oder Hydroxycarbonsäuren bzw. deren zur Esterbildung befähigten Derivate. Sie enthalten in ihrem Molekül wenigstens einen 5-gliedrigen Imidring. In einer besonders wichtigen Ausführungsform der Erfindung sind dabei die Imidringe im Molekül so angeordnet, daß die in die Polyesterharzbildung eingreifenden funktionellen Gruppen über verschiedene Ringglieder der Imidringe hinweg miteinander in Verbindung stehen. Entsprechende Dicarbonsäuren und Dialkohole bzw. Hydroxycarbonsäuren sind an sich bekannt, und zwar insbesondere aus dem Stand der Technik, der sich mit der Herstellung von gesättigten, Imidringe enthaltenden Polyesterharzen beschäftigt. Hingewiesen sei hier z. B. auf die britische Patentschrift 9 73 377 oder die französische Patentschrift 13 68 741. Sie können nach bekannten Verfahren, z. B. aus primäre Aminogruppen enthaltenden Verbindungen mit zur Bildung von cyclischen Imidgruppen befähigten, wenigstens zwei Carboxylgruppen enthaltenden Verbindungen hergestellt werden mit der Maßgabe, daß die zur Bildung eines imidgruppenhaltigen Moleküls verwendeten Ausgangsmoleküle zusammen noch zwei zur Esterbildung befähigte Gruppen enthalten, die nicht zur Imidbildung benötigt werden.

Die Imidgruppen enthaltenden Verbindungen können getrennt hergestellt werden und dann dem zur Polyesterherstellung verwendeten Reaktionsgemisch zugesetzt werden oder auch unmittelbar im Reaktionsgemisch aus ihren Ausgangsstoffen in Gegenwart weiterer Komponenten des Polyesterharzes gebildet werden, wie es für gesättigte Polyesterharze, beispielsweise in den genannten Patentschriften GB-PS 9 73 377 oder FR-PS 13 68 741 beschrieben ist. In diesem letzten Fall ist jedoch darauf zu achten, daß die ungesättigten Polyesterkomponenten, insbesondere ungesättigte Polycarbonsäuren, erst nach einer ausreichenden, vorzugsweise vollständigen Bildung von Imidringen dem Reaktionsgemisch zugesetzt werden, um unerwünschte Nebenreaktionen auszuschließen. Zur Esterbildung befähigte Gruppen sind primäre oder sekundäre alkoholische Hydroxylgruppen und Carboxylgruppen sowie davon abgeleitete Gruppierungen wie Anhydride, Halogenide, Ester, Epoxide.

Beispiele für die erfindungsgemäß zu verwendenden Verbindungen sind Stoffe der folgenden Formeln, die aus den in der 2. und 3. Spalte der nachfolgenden Tabelle aufgeführten Ausgangsstoffen hergestellt werden können:

1) 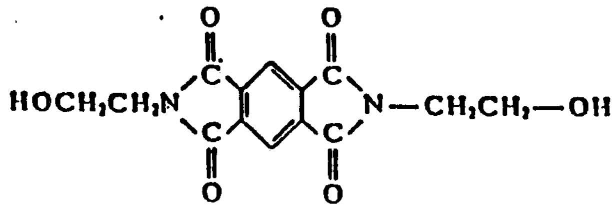 $H_2N—CH_2—CH_2—OH$ 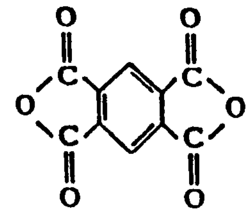 (PMA)

2) 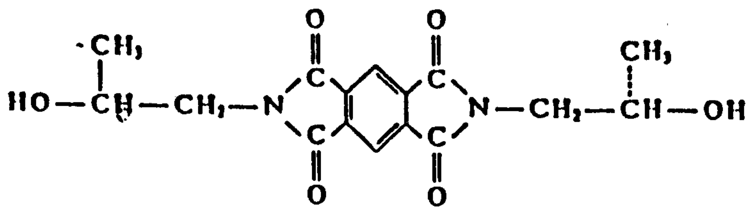 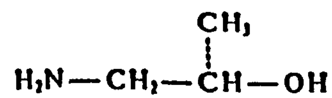 PMA

3) 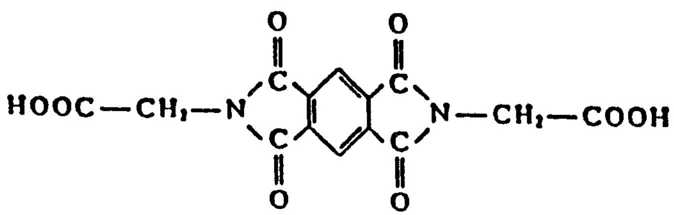 $H_2N—CH_2—COOH$ PMA

4) 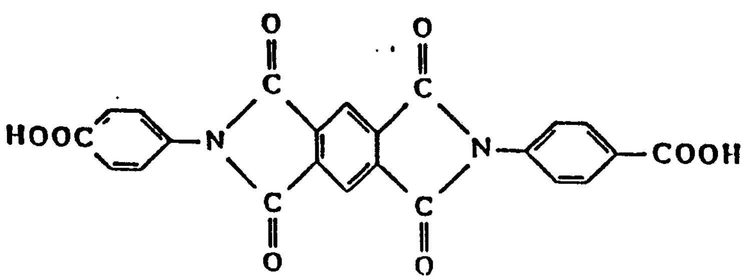 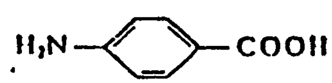 PMA

5) 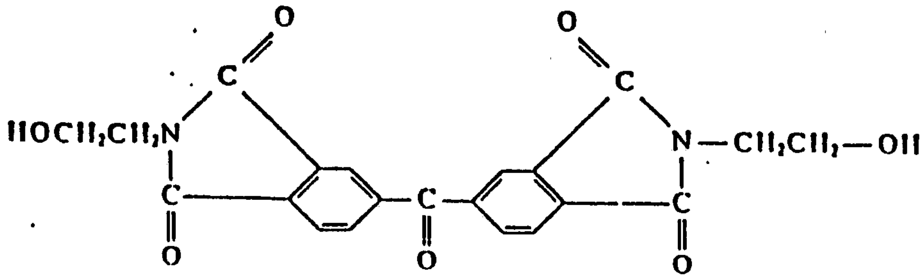 $H_2N-CH_2-CH_2-OH$ 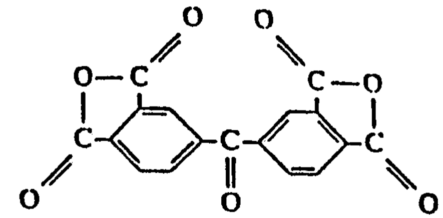

6) 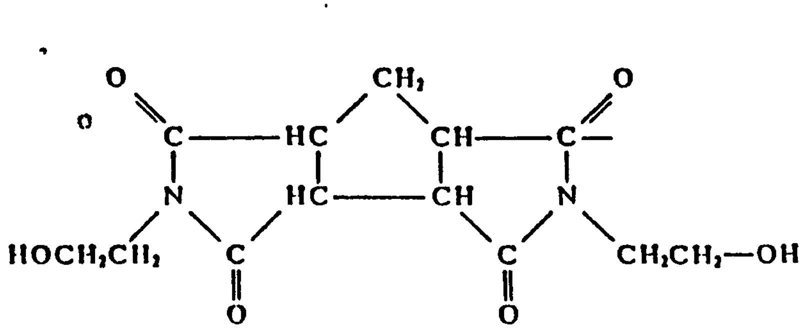 $H_2N-CH_2-CH_2-OH$ 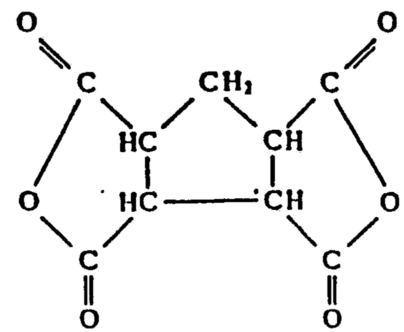

7) 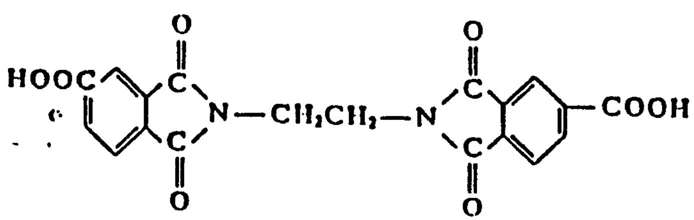 $H_2N-CH_2-CH_2-NH_2$ 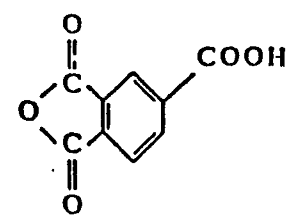 (TMA)

8) 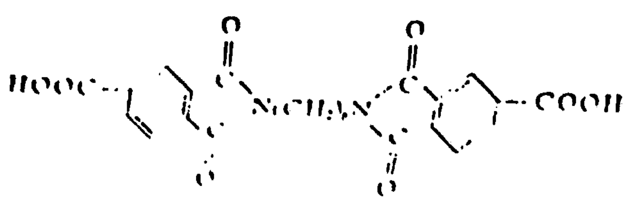 $H_2N-CH_2-NH_2$ TMA

9) 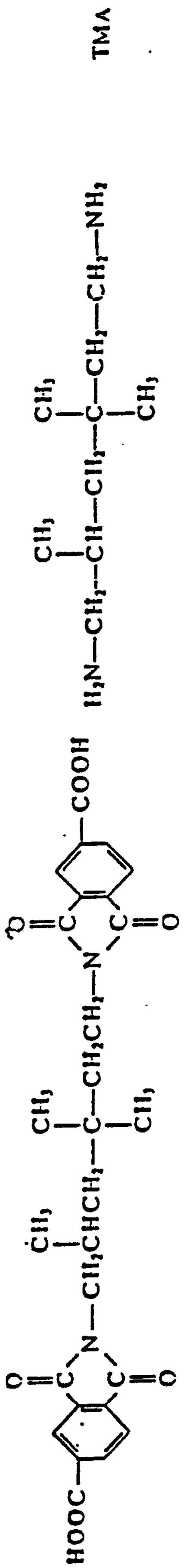


10) 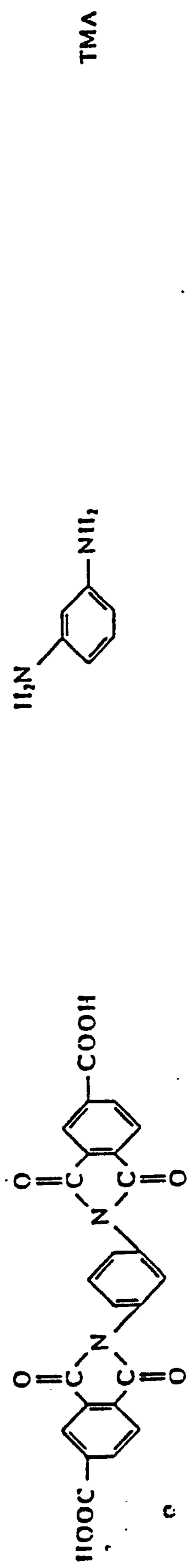


11) 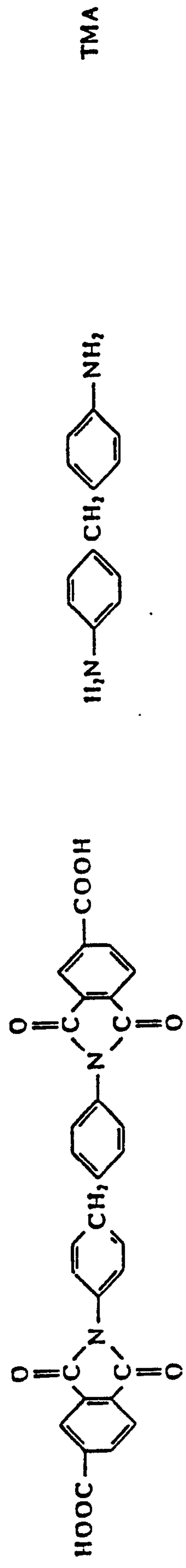


12) 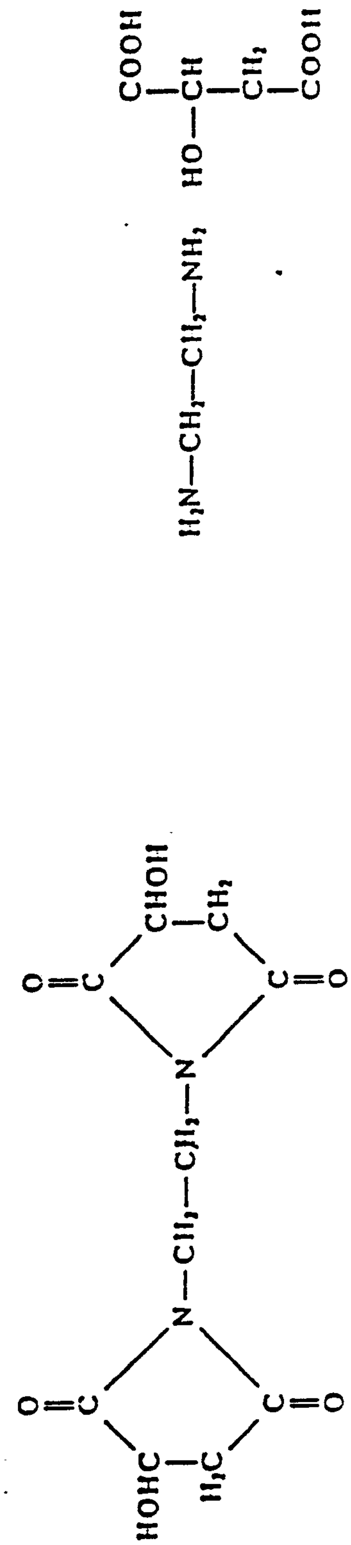

| | | |
|---|---|---|
| 13) 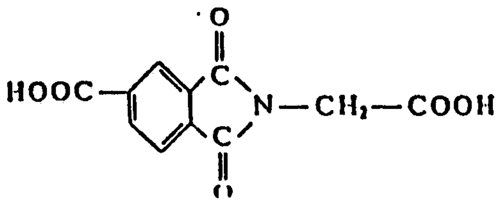 | $H_2N-CH_2-COOH$ | TMA |
| 14) 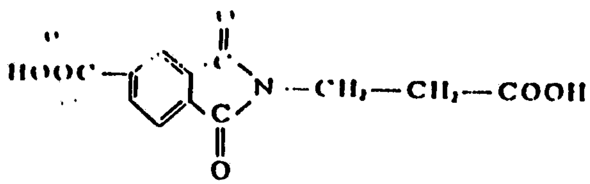 | $H_2N-CH_2-CH_2-COOH$ | TMA |
| 15) 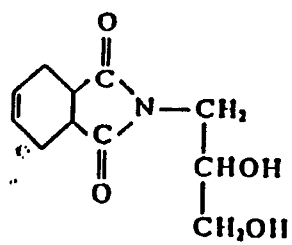 | 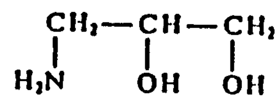 | 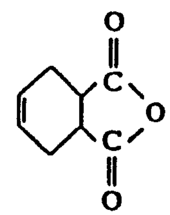 |
| 16) 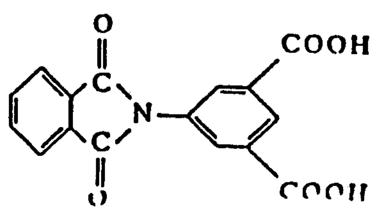 | 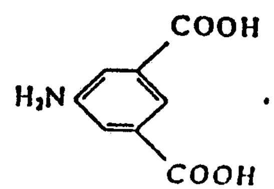 | 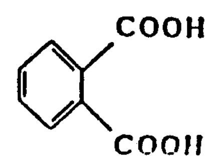 |

Aus den aufgezählten Verbindungen 1 - 16 ist ersichtlich, daß sich z. B. Reaktionsprodukte aus
1) Tetracarbonsäuren und Aminoalkohlen,
2) Tetracarbonsäuren und Aminocarbonsäuren,
3) Tricarbonsäuren und Aminoalkoholen,
4) Tricarbonsäuren und Aminocarbonsäuren,
5) Tricarbonsäuren und prim. Diaminen,
6) Hydroxydicarbonsäuren und Aminoalkoholen,
7) Hydroxydicarbonsäuren und Aminocarbonsäuren,
8) Hydroxydicarbonsäuren und Diaminen,
9) Dicarbonsäuren und Aminodiolen,
10) Dicarbonsäuren und Aminodicarbonsäuren

verwenden lassen. Besondere Bedeutung kann dabei Verbindungen zukommen, die aus aromatischen Polycarbonsäuren und/oder aromatischen primären Aminen aufgebaut sind. Die hierbei entstehenden Verbindungen, in denen die Imidringe unmittelbar an einen aromatischen Ring gebunden sind oder sogar unmittelbar daran teilnehmen, können für spezielle Verwendungszwecke der Harze, z. B. auf dem Gebiet der Elektroisolation, wichtig sein.

Die Erfindung betrifft auch ein Verfahren zur Herstellung von ungesättigten, homo- und/oder copolymerisierbaren linearen Polyestern aus linearen, niedermolekularen Diolen höhermolekularen Diolen mit endständigen Hydroxylgruppen und mindestens einer ungesättigten Dicarbonsäure bzw. deren zur Esterbildung befähigten Derivaten, das dadurch gekennzeichnet ist, daß als Komponente A ein Diol mit endständigen Hydroxylgruppen und einem mittleren Molekulargewicht von 700 bis 1200, als Komponente B eine oder mehrere, α,β-ungesättigte Dicarbonsäuren aus der Gruppe Maleinsäure, Fumarsäure, Itaconsäure, Citraconsäure, Mesaconsäure und Aconitsäure bzw. deren Derivate und als Komponente C ein lineares Diol mit 2 bis 6 Kohlenstoffatomen gleichzeitig miteinander umgesetzt werden, wobei das Äquivalentverhältnis A : B von 0,3 : 1 bis 1,2 : 1 und das Äquivalentverhältnis C : (A + B) von 0,5 : 1 bis 1 : 1 betragen.

Vorteilhaft wird als Komponente A ein Polyesterdiol, besonders vorteilhaft ein Polyesterdiol, das durch Glykolyse von Polyethylenterephthalat erhalten worden ist, eingesetzt. Das als Komponente A bevorzugte Polyesterdiol ist durch Umsetzung von Polyethylenterephthalat mit Propylenglykol im Gewichtsverhältnis Polyethylterephthalat : Propylenglykol von 8 : 1 bis 12 : 1 erhalten worden.

Vorteilhaft werden bei der Herstellung der Polyester stickstoffhaltige Verbindungen der allgemeinen Formeln

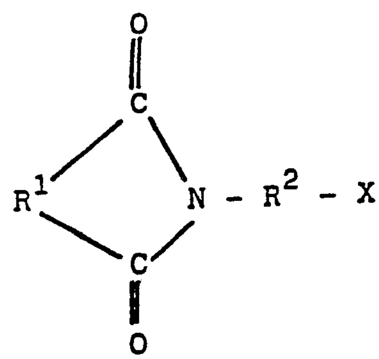

oder

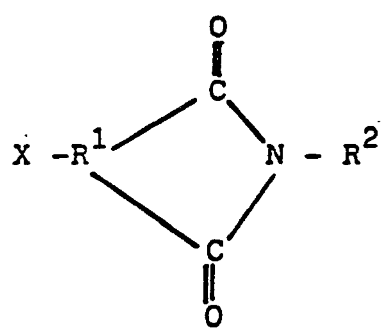

mit eingesetzt oder der Polyester wird mit den stückstoffhaltigen Verbindungen der obigen allgemeinen Formeln umgesetzt, in denen $R^1$ einen aliphatischen Rest, an dem die beiden zur Anhydridbildung befähigten Carboxylreste in 1,2- oder 1,3- Stellung stehen, $R^2$ einen Alkyl- oder Arylrest und X einen OH- oder $CO_2H$-Rest bedeuten, wobei gegebenenfalls die Verknüpfung der Hydroxylgruppen der stickstoffhaltigen Verbindungen an den Hydroxylgruppen des ungesättigten Polyesters mit Di- oder Triisocyanaten erfolgen kann.

Bei einer anderen Ausführungsform des erfindungsgemäßen Verfahrens werden vorteilhaft in den Polyester Reste einer Dicarbonsäure, eines Dialkohols und/oder einer Hydroxycarbonsäure mit jeweils wenigstens einer 5-gliedrigen cyclischen Imidgruppe einkondensiert.

Die Herstellung der ungesättigten Polyester erfolgt in bekannter Weise durch Schmelzkondensation. Hierbei

entstehen ungesättigte Polyester, die gut in Styrol zu ungesättigten Polyesterharzen löslich sind. Diese zeigen auch bei sehr hohen Styrolgehalten eine stark ausgeprägte Strukturviskosität und Thixotropie.

Die Erfindung betrifft auch die Verwendung einer Lösung der erfindungsgemäßen Polyester in copolymerisierbaren Vinyl- und/oder Allylmonomeren, deren Anteil an Polyester 40 - 80 Gew.-% beträgt und die zusätzlich bekannte Härter und gegebenenfalls Beschleuniger und Verlaufsmittel enthält, zum Imprägnieren von elektrischen Maschinen oder Teilen hiervon sowie als Überzugsmasse für elektrische Bauelemente und Schaltungen. Die Polyesterharze eignen sich also sehr gut als Tränkharze im Elektromaschinenbau, zum Tränken von Statoren, Rotoren, Transformatoren und von sonstigen Spulen. Durch die Fließanomalien werden die Abtropfverluste sowohl vor der Härtung als auch die Abtropfverluste während der Aushärtung im Ofen stark reduziert. Dadurch wird die Ausfüllung der Hohlräume in den Wicklungen zwischen den Drähten gegenüber konventionellen ungesättigten Polyesterharztränkmitteln verbessert. Dies hat eine bessere Verfestigung der Wicklungen und eine bessere Wärmeableitung aus den Wicklungen heraus zur Folge.

Durch die Verringerung der Abtropfverluste bei der Aushärtung im Ofen wird die Wirtschaftlichkeit verbessert, da weniger Material als Abtropfverlust im Ofen aushärtet und verworfen werden muß. Bei der Verwendung der ungesättigten Polyesterharze als Überzugsmasse für elektrische oder elektronische Bauelemente und Schaltungen können den Harzen übliche Füll- und/oder Verstärkungsstoffe, wie Quarzmehl, Kreide, Aluminiumhydroxyd bzw. Asbest- oder Glasfasern beigemischt werden. Nach Zusatz geeigneter Fotoinitiatoren können diese Harze auch durch Ultraviolettbestrahlung gehärtet werden.

Zur Erreichung der gewünschten Fließanomalien ist es nicht erforderlich, daß als ungesättigte Polyester ausschließlich die erfindungsgemäßen Polyester eingesetzt werden. Die Lösungs kann vielmehr zusätzlich ungesättigte Polyester und/oder Polyesterimide, die frei sind von Fließanomalien, in einem Anteil von bis zu 90 Gew.-% bezogen auf die Gesamtmenge an ungesättigten Polyestern und Polyesterimiden enthalten. Hier sind die ungesättigten Polyester bzw. Polyesterimide einzusetzen, die nach dem Stand der Technik bekannt sind und die als Elektroisoliermaterialien geeignet sind.

Im folgenden wird die Erfindung anhand von Ausführungsbeispielen näher erläutert.

**Beispiel 1**

a) Glykolyse von Polyethylenglykolterephthalat

In einem Kolben mit Rührer, Rückflußkühler und Thermometer werden 3700 g Polyethylenglykolterephthalat langsam bei 275°C aufgeschmolzen. Dann werden 370 g Propylenglykol langsam während einer Stunde zugetropft. Nach einer weiteren Stunde Reaktionszeit bei 275°C wird das Material abgekühlt. Es hat dann ein Hydroxyläquivalent von ca. 500.

b) Herstellung eines ungesättigten Polyesters

500 g des gemäß a) hergestellten Polyesterdiols werden zusammen mit 98 g Maleinsäureanhydrid und 60 g Dimethylformamid in einem Kolben mit Rührer, Thermometer und Wasserabscheider mit Rückflußkühler unter Stickstoff zur Reaktion gebracht. Nachdem die Exothermie abgeklungen ist, werden 38 g 1,2-Propylenglykol bei 200°C zugetropft. Die Reaktion wird bei 200 bis 210°C so lange durchgeführt, bis die Säurezahl unter 35 abgesunken ist. Nach Zugabe von 1 g Hydrochinon wird die Harzschmelze nach Abkühlen auf 150°C mit 450 g Styrol aufgenommen. Das resultierende Harz zeigt eine außerordentlich hohe Strukturviskosität. Nach Abkühlung auf 75°C werden weitere 200 g Styrol zugegeben. Das so erhaltene Produkt wird einem in Styrol gelösten, imidmodifizierten ungesättigten Polyester aus 1 Mol N-Hydroxyethyltetrahydrophthalsäureimid, 1 Mol Maleinsäureanhydrid und 0,33 Mol Trimethylolpropan in einer solchen Menge zugesetzt, daß der Anteil an erfindungsgemäßem Polyester bezogen auf die Gesamtmenge an ungesättigtem Polyester 10 % beträgt. Die Viskosität des so erhaltenen Produktes wird im Rotationsviskosimeter gemessen. Es zeigt sich, daß bei einer Vergrößerung des Schergefälles von 3 auf 200 $s^{-1}$ die Viskosität um 80 % abfällt. Wird diese Messung bei 80°C wiederholt, ist der gleiche Effekt zu beobachten.

**Beispiel 2**

a) Herstellung eines Polyesterdiols (Komponente A)

Aus 0,055 Mol Butandiol-1,4 und 0,05 Mol Dimethylsebazat wird mit 0,1 g Bleioxyd als Katalysator ein durch Hydroxylgruppen terminierter Polyester hergestellt. Hierzu wird die Kondensationsreaktion zunächst 2 Std. bei 170°C durchgeführt. Danach wird der Druck langsam auf 0,05 torr reduziert. Während 4 Stunden wird bei 215°C die Kondensationsreaktion zu Ende geführt.

b) Herstellung eines ungesättigten Polyesters

500 g des gemäß a) hergestellten Produktes werden nach der Vorschrift des Beispiel 1 b) in gleicher Weise weiterverarbeitet wie das gemäß Beispiel 1 a) hergestellte Polyesterdiol. Das erhaltene Produkt zeigt die gleichen Eigenschaften wie im Beispiel 1.

Anwendung der ungesättigten Polyesterharze

Die erfindungsgemäßen ungesättigten Polyesterharze werden in styrolischer Lösung sowohl allein als auch in den beschriebenen Mischungen mit nach dem Stand der Technik bekannten Polyesterharzen nach Zusatz von 1 Gew.-% tert.-Butylperbenzoat zum Imprägnieren von Statoren eines Normmotors im Tauchverfahren benutzt. Die Härtung der Harze wird während 2 Stunden bei 140°C durchgeführt. Es ergeben sich Abtropfverluste im Ofen von 5 bis 10 Gew.-%, und es resultieren ausgezeichnete Imprägnierungen.

**Patentansprüche**

1. Ungesättigte, homo- und/oder copolymerisierbare lineare Polyester, hergestellt aus linearen, niedermolekularen Diolen, höhermolekularen Diolen mit endständigen Hydroxylgruppen und mindestens einer ungesättigten Dicarbonsäure bzw. deren zur Esterbildung befähigten Derivaten, dadurch gekennzeichnet, daß die Polyester als Komponente A ein Diol mit endständigen Hydroxylgruppen und einem mittleren Molekulargewicht von 700 - 1200, als Komponente, eine oder mehrere α,β-ungesättigte Dicarbonsäuren aus der Gruppe Maleinsäure, Fumarsäure, Itaconsäure, Citraconsäure, Mesaconsäure und Aconitsäure bzw. deren Derivate und als Komponente C ein lineares Diol mit 2 - 6 Kohlenstoffatomen einkondensiert enthalten, wobei das Äquivalentverhältnis A : B von 0,8 : 1 bis 1,2 : 1 und das Äquivalentverhältnis C : (A + B) von 0,5 : 1 bis 1 : 1 betragen.

2. Polyester nach Anspruch 1, dadurch gekennzeichnet, daß die Komponente A ein Polyesterdiol ist.

3. Polyester nach Anspruch 2, dadurch gekennzeichnet, daß die Komponente A durch Glykolyse von Polyethylenterephthalat erhalten worden ist.

4. Polyester nach Anspruch 3, dadurch gekennzeichnet, daß die Komponente A durch Umsetzung von Polyethylenterephthalat mit Propylenglykol im Gewichtsverhältnis Polyethylenterephthalat: Propylenglykol von 8 : 1 bis 12 : 1 erhalten worden ist.

5. Polyester nach Anspruch 1 bis 4, dadurch gekennzeichnet, daß die Polyester mit stickstoffhaltigen Verbindungen der allgemeinen Formeln

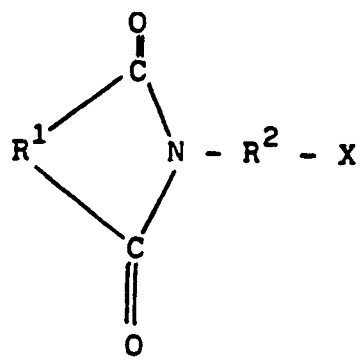

oder

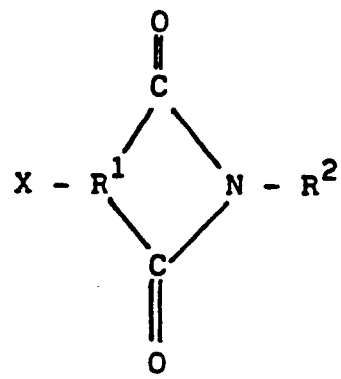

modifiziert sind, in denen $R^1$ einen aliphatischen Rest, an dem die beiden zur Anhydridbildung befähigten Carboxylreste in 1,2- oder 1,3-Stellung stehen, $R^2$ einen Alkyl- oder Arylrest und X einen OH- oder $CO_2H$-Rest bedeuten, wobei gegebenenfalls die Verknüpfung der Hydroxylgruppen der stickstoffhaltigen Verbindungen an den Hydroxylgruppen des ungesättigten Polyesters mit Di- oder Triisocyanaten erfolgt sein kann.

6. Polyester nach Anspruch 1 bis 4, dadurch gekennzeichnet, daß in die Polyester Reste einer Dicarbonsäure, eines Dialkohols und/oder einer Hydroxycarbonsäure mit jeweils wenigstens einer 5-gliedrigen cyclischen Imidgruppe einkondensiert sind.

7. Verfahren zur Herstellung von ungesättigten, homo- und/oder copolymerisierbaren linearen Polyestern aus linaren, niedermolekularen Diolen, höhermolekularen Diolen mit endständigen Hydroxylgruppen und mindestens einer ungesättigten Dicarbonsäure bzw. deren zur Esterbildung befähigten Derivaten, dadurch gekennzeichnet, daß als Komponente A ein Diol mit endständigen Hydroxylgruppen und einem mittleren Molekulargewicht von 700 - 1200, als Komponente B eine oder mehrere α,β-ungesättigte Dicarbonsäuren aus der Gruppe Maleinsäure, Fumarsäure, Itaconsäure, Citraconsäure, Mesaconsäure und Aconitsäure bzw. deren

Derivate und als Komponente C ein lineares Diol mit 2 bis 6 Kohlenstoffatomen gleichzeitig miteinander ungesetzt werden, wobei das Äquivalentverhältnis A : B von 0,8 : 1 bis 1,2 : 1 und das Äquivalentverhältnis C : (A + B) von 0,5 : 1 bis 1 : 1 betragen.

8. Verfahren nach Anspruch 7, dadurch gekennzeichnet, daß als Komponente A ein Polyesterdiol eingesetzt wird.

9. Verfahren nach Anspruch 8, dadurch gekennzeichnet, daß als Komponente A ein Polyesterdiol eingesetzt wird, das durch Glykolyse von Polyethylenterephthalat erhalten worden ist.

10. Verfahren nach Anspruch 9, dadurch gekennzeichnet, daß als Komponente A ein Polyesterdiol eingesetzt wird, das durch Umsetzung von Polyethylenterephthalat mit Propylenglykol im Gewichtsverhältnis Polyethylenterephthalat: Propylenglykol von 8 : 1 bis 12 : 1 erhalten worden ist.

11. Verfahren nach Anspruch 7 bis 10, dadurch gekennzeichnet, daß bei der Herstellung der Polyester stickstoffhaltige Verbindungen der allgemeinen Formeln

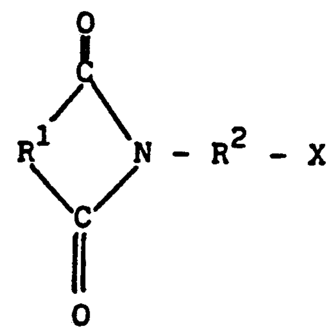

oder

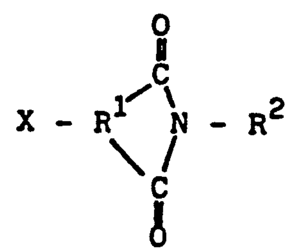

mit eingesetzt werden oder dis Polyester mit den stickstoffhaltigen Verbindungen der obigen allgemeinen Formeln umgesetzt werden, in denen $R^1$ einen aliphatischen Rest, an dem die beiden zur Anhydridbildung befähigten Carboxylreste in 1,2- oder 1,3-Stellung stehen, $R^2$ einen Alkyl- oder Arylresü und X einen OH- oder $CO_2H$-Rest bedeuten, wobei gegebenenfalls die Verknüpfung der Hydroxylgruppen der stickstoffhaltigen Verbindungen an den Hydroxylgruppen des ungesättigten Polyesters mit Di- oder Triisocyanaten erfolgen kann.

12. Verfahren nach Anspruch 7 bis 10, dadurch gekennzeichnet, daß in den Polyester Reste einer Dicarbonsäure, eines Dialkohols und/oder einer Hydroxycarbonsäure mit jeweils wenigstens einer 5-gliedrigen cyclischen Imidgruppe einkondensiert werden.

13. Verwendung einer Lösung der Polyester nach Anspruch 1 bis 6 in copolymerisierbaren Vinyl- und/oder Allylmonomeren, deren Anteil an Polyester 40 - 80 Gew.-% beträgt und die zusätzlich bekannte Härter und gegebenenfalls Beschleuniger und Verlaufmittel enthält, zum Imprägnieren von elektrischen Maschinen oder Teilen hiervon.

14. Verwendung einer Lösung der Polyester nach Anspruch 1 bis 6, in copolymerisierbaren Vinyl- und/oder Allylmonomeren, deren Anteil an Polyester 40 - 80 Gew.-% beträgt und die zusätzlich bekannte Härter und gegebenenfalls Beschleuniger und Verlaufmittel enthält, als Uberzugsmasse für elektrische und/oder elektronische Bauelemente und Schaltungen.

15. Verwendung nach Anspruch 13 oder 14, dadurch gekennzeichnet, daß die Lösung zusätzlich ungesättigte Polyester und/oder Polyesterimide, die frei sind von Fließanomalien, in einem Anteil von bis zu 90 Gew.-% bezogen auf die Gesamtmenge an ungesättigten Polyestern und Polyesterimiden enthält.

**Claims**

1. Unsaturated, homo- and/or copolymerizable linear polyesters, prepared from linear, low molecular weight diols, relatively high molecular weight diols having terminal hydroxyl groups, and at least one unsaturated dicarboxylic acid, or derivatives thereof which are capable of ester formation, characterized in that the

polyesters contain, condensed in, a diol having terminal hydroxyl groups and an average molecular weight of 700-1,200 as component A, one or more α,β-unsaturated dicarboxylic acids from the group comprising maleic acid, fumaric acid, itaconic acid, citraconic acid, mesaconic acid and aconitic acid, or the derivatives thereof, as component B, and a linear diol having 2-6 carbon atoms as component C, the A: B equivalent ratio being from 0.8 : 1 to 1.2 : 1 and the C : (A+B) equivalent ratio being from 0.5 : 1 to 1 : 1.

2. The polyester according to claim 1, wherein the component (A) is a polyester diol.

3. The polyester according to claim 2, wherein the component (A) is obtained by glycolysis of polyethyleneterephthalate.

4. The polyester according to claim 3, wherein the component (A) is obtained by reaction of polyethyleneterephthalate with propylene glycol in the weight ratio polyethyleneterephthalate: propylene glycol of from about 8 : 1 to 12 : 1.

5. The polyester according to claims 1, 2, 3 or 4, wherein the polyesters are modified by nitrogen-containing compounds of the general formulae:

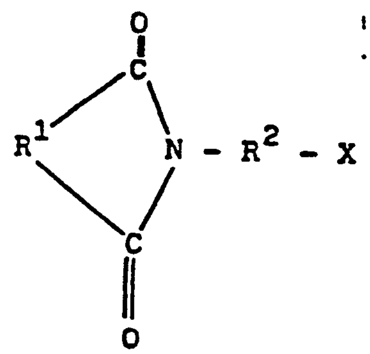
or
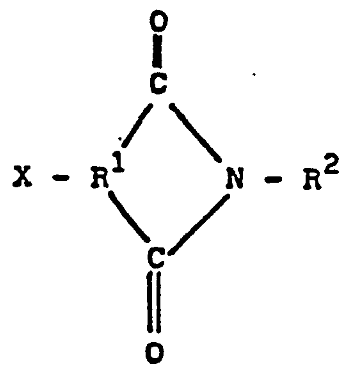

wherein $R^1$ is an aliphatic radical in which the two carboxyl radicals capable of forming anhydrides are 1,2- or 1,3- position; $R^2$ is an alkyl or aryl radical; and X is an OH or $CO_2H$ radical, wherein optionally the linkage of the hydroxyl groups of the nitrogen-containing compounds to the hydroxyl groups of the unsaturated polyester is accomplished by means of di- or triisocyanates.

6. The polyester according to claims 1, 2, 3 or 4, wherein radicals with at least one 5-membered cvclic imide group selected from the group consisting of radicals of a dicarboxylic acid, a dialcohol, a hydroxycarboxylic acid and mixtures thereof are condensed into the polyesters.

7. Process for the preparation of unsaturated, homo- and/or copolymerizable linear polyesters from linear, low molecular weight diols, relatively high molecular weight diols having terminal hydroxyl groups, and at least one unsaturated dicarboxylic acid, or derivatives thereof which are capable of ester formation, characterized in that a diol having terminal hydroxyl groups and an average molecular weight of 700-1,200 as component A, one or more α,β-unsaturated dicarboxylic acids from the group comprising maleic acid, fumaric acid, itaconic acid, citraconic acid, mesaconic acid and aconitic acid, or the derivatives thereof, as component B, and a linear diol having 2 to 6 carbon atoms as component C are simultaneously reacted with one another, the A : B equivalent ratio being from 0.8 : 1 to 1.2 : 1 and the C : (A + B) equivalent ratio being from 0.5 : 1 to 1 : 1.

8. The method according to claim 7, wherein a polyester diol is employed as component (A).

9. The method according to claim 8, wherein a polyester diol is used as component (A) which is obtained by glycolysis of polyethyleneterephthalate.

10. The method according to claim 9, wherein a polyester diol is employed as component (A) which is obtained by reaction of polyethyleneterephthalate with propylene glycol in the weight ratio of polyethyleneterephthalate: propylene glycol of from about 8 : 1 to 12 : 1.

11. The method according to claims 7, 8, 9 or 10, characterized by the feature that in the preparation of the polyesters, nitrogen-containing compounds of the general formulae:

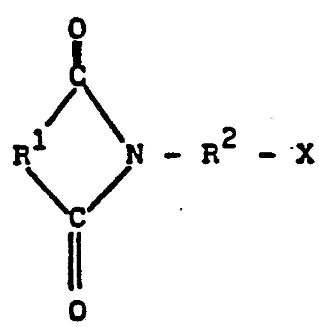
or
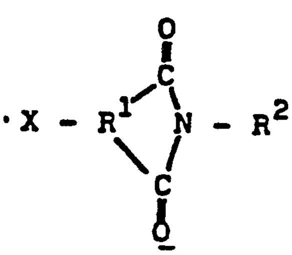

are employed at the same time or the preformed polyesters are reacted with the nitrogen-containing compounds of the general formulae above, wherein $R^1$ is an aliphatic radical at which the two carboxyl radicals capable of forming an anhydride are in the 1,2- or 1,3- position; $R^2$ is an alkyl or aryl radical; and X is an OH or $CO_2H$ radical, wherein optionally, the linkage of the hydroxyl groups of the nitrogen-containing compounds can take place to the hydroxyl groups of the unsaturated polyester by means of di- or triisocynates.

12. The method according to claims 7, 8, 9 or 10, wherein radicals with at least one 5-membered cyclic imide group selected from the group consisting of the radicals of a dicarboxylic acid, a dialcohol, a hydrocarboxylic acid and mixtures thereof are condensed into the polyester.

13. The use of a solution of the polyesters of claims 1, 2, 3, 4, 5 or 6, in copolymerizable vinyl monomers, allyl monomers or mixtures thereof, the polyester content of which is about 40 to 80 % by weight of the solution and which solution further contains hardeners and optionally, accelerators and flow agents, for impregnating electric machinery or parts thereof.

14. The use of a solution of the polyesters according to claims 1, 2, 3, 4, 5 or 6, in copolymerizable vinyl monomers, allyl monomers or mixtures thereof, the polyester content of which is about 40 to 80 % by weight of the solution and which solution further contains hardeners and optionally, accelerators and flow agents, as a coating compound for electrical and/or electronic components and circuits.

15. The use of the solution of claim 13 or 14, wherein the solution additionally contains unsaturated polyesters, polyester imides or mixtures thereof, which are free of flow anomalies,in an amount of up to 90 % by weight based on the total amount of unsaturated polyesters and polyester imides in said solution.

**Revendications**

1. Polyesters linéaires insaturés homo- et/ou copolymérisables, préparés en partant de diols linéaires à bas poids moléculaire, de diols à poids moléculaire plus élevé à groupes hydroxyle terminaux et d'au moins un acide dicarboxylique insaturé ou de ses dérivés aptes à la formation d'esters, caractérisés par le fait que les polyesters contiennent à l'état condensé, comme constituant A un diol à groupes hydroxyle terminaux et ayant un poids moléculaire moyen de 700 à 1200, comme constituant B un ou plusieurs acides dicarboxyliques insaturés en $\alpha$, $\beta$ du groupe comprenant l'acide maléique, l'acide fumarique, l'acide itaconique, l'acide citraconique, l'acide mésaconique et l'acide aconitique ou leurs dérivés et comme constituant C, un diol linéaire ayant 2 à 6 atomes de carbone, le rapport d'équivalents A : B étant de 0,8 : 1 à 1,2 : 1 et le rapport d'équivalents C : (A + B) de 0,5 : 1 à 1 : 1.

2. Polyesters selon la revendication 1, caractérisés par le fait que le constituant A est un polyesterdiol.

3. Polyesters selon la revendication 2, caractérisés par le fait que le constituant A a été obtenu par glycolyse de polytéréphtalate d'éthylène.

4. Polyesters selon la revendication 3, caractérisés par le fait que le constituant A a été obtenu par réaction du polytéréphtalate d'éthylène sur le propylèneglycol en un rapport de poids polytéréphtalate d'éthylène/propylèneglycol de 8 : 1 à 12 : 1.

5. Polyesters selon les revendications 1 à 4, caractérisés par le fait que les polyesters sont modifiés par des composés azotés des formules générales:

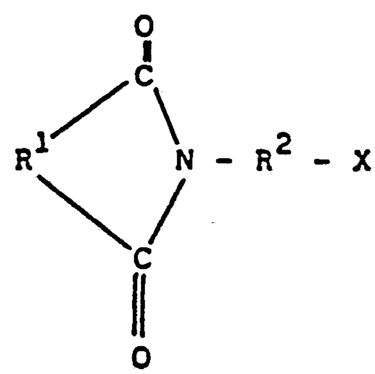

ou

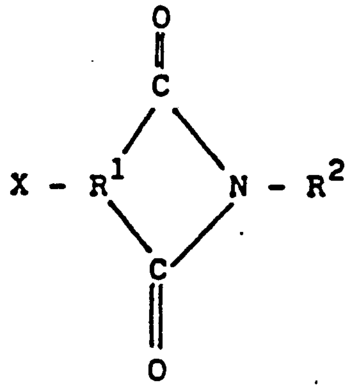

dans lequel $R^1$ représente un radical aliphatique sur lequel les deux radicaux carboxyle capables de former des anhydrides sont en position 1,2 ou 1,3, $R^2$ un radical alkyle ou aryle et X un radical OH ou $CO_2H$, l'enchaînement des groupes hydroxyle des composés azotés aux groupes hydroxyle du polyester insaturé ayant pu éventuellement être effectué avec des di- ou triisocyanates.

6. Polyesters selon les revendications 1 à 4, caractérisés par le fait que dans les polyesters sont inclus par condensation des radicaux d'un acide dicarboxylique, d'un dialcool et/ou d'un acide hydroxycarboxylique ayant chaque fois au moins un groupe imide cyclique à 5 chaînons.

7. Procédé de préparation de polyesters linéaires insaturés homo- et/ou copolymérisables en partant de diols linéaires à bas poids moléculaire, de diols à poids moléculaires plus élevés à groupes hydroxyle terminaux et d'au moins un acide dicarboxylique insaturé ou de ses dérivés aptes à la formation d'esters, caractérisé par le fait qque l'on fait réagir simultanément entre eux comme constituamt A un diol à groupes hydroxyle terminaux et ayant un poids moléculaire moyen de 700 à 1200, comme constituant B un ou plusieurs acides dicarboxyliques insaturés en α, β du groupe comprenant l'acide maléique, l'acide fumarique, l'acide litaconique, l'acide citraconique, l'acide mésaconique et l'acide aconitique ou leurs dérivés et comme constituant C un diol linéaire ayant 2 à 6 atomes de carbone, le rapport d'équivalents A : B étant de 0,8 : 1 à 1,2 : 1 et le rapport d'équivalents C : (A + B) de 0,5 : 1 à 1 : 1.

8. Procédé selon la revendication 7, caractérisé par le fait que comme constituant A, on utilise un polyesterdiol.

9. Procédé selon la revendication 8, caractérisé par le fait que comme constituant A, on utilise un polyester, diol qui a été obtenu par glycolyse du polytéréphtalate d'éthylène.

10. Procédé selon la revendication 9, caractérisé par le fait que comme constituant A, on utilise un polyesterdiol qui a été obtenu par réaction du polytéréphtalate d'éthylène sur le propylèneglycol en un rapport de poids polytéréphtalate d'éthylène/propylèneglycol de 8 : 1 à 12 : 1.

11. Procédé selon les revendications 7 à 10, caractérisé par le fait que lors de la préparation des polyesters, on utilise en même temps des composés azotés des formules générales:

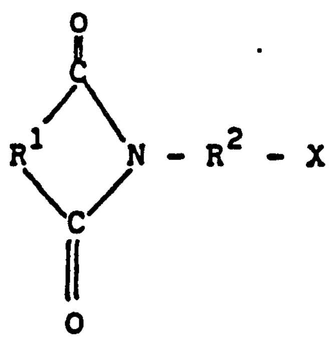

ou

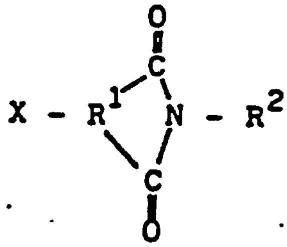

ou que l'on fait réagir les polyesters sur les composés azotés des formules générales ci-dessus, dans lesquelles $R^1$ représente un radical aliphatique sur lequel les deux radicaux carboxyle capables de former des anhydrides sont en position 1,2 ou 1,3, $R^2$ un radical alkyle ou aryle et X un radical OH ou $CO_2H$, l'enchaînement des groupes hydroxyle des composés azotés aux groupes hydroxyle du polyester insaturé pouvant éventuellement s'effectuer avec des di- ou triisocyanates.

12. Procédé selon les revendications 7 à 10, caractérisé par le fait que dans le polyester, on inclut par condensation des radicaux d'un acide dicarboxylique, d'un dialcool et/ou d'un acide hydroxycarboxylique ayant chaque fois au moins un groupe imide cyclique à 5 chaînons.

13. Utilisation d'une solution des polyesters selon les revendications 1 à 6 dans des monomères vinyliques et/ou allyliques copolymérisables dont la proportion de polyester est de 40 à 80 % et qui contient en outre des durcisseurs connus et éventuellement des accélérateurs et agents d'étalement, pour l'imprégnation de machines électriques ou de parties de celles-ci.

14. Utilisation d'une solution des polyesters selon les revendications 1 à 6 dans des monomères vinyliques et/ou allyliques copolymérisables dont la proportion de polyester est de 40 à 80 % en poids et qui contient en outre des durcisseurs connus et éventuellement des accélérateurs et agents d'étalement, comme masse de revêtement pour composants et circuits électriques et/ou électroniques.

15. Utilisation selon l'une des revendications 13 et 14, caractérisée par le fait que la solution contient en outre des polyesters et/ou polyesterimides insaturés qui sont exempts d'anomalies d'écoulement, en une proportion allant jusqu'à 90 à en poids relativement à la quantité totale de polyesters et polyesterimides insaturés.